# EUROPÄISCHE PATENTSCHRIFT

(11) **EP 0 639 474 B1**
(45) Veröffentlichungstag und Bekanntmachung des Hinweises auf die Patenterteilung: **20.01.1999**
(21) Anmeldenummer: 94110169.3
(22) Anmeldetag: 30.06.1994
(51) Int. Cl.: B60H 3/06, B01D 46/52, B01D 46/42

(54) **Luftfilter für den Innenraum von Kraftfahrzeugen**
Air filter for the interior of a motor vehicle
Filtre à air pour l'habitacle d'un véhicule automobile

(30) Priorität: 19.08.1993 DE 4327834
(43) Veröffentlichungstag der Anmeldung: 22.02.1995
(73) Patentinhaber: FILTERWERK MANN & HUMMEL GMBH, 71631 Ludwigsburg (DE)
(72) Erfinder: Ernst, Volker, D-74343 Sachsenheim (DE); Klotz, Arthur, D-71686 Remseck (DE); Leipelt, Rudolf, D-71672 Marbach (DE)
(74) Vertreter: Voth, Gerhard, Dipl.-Ing.

(56) Entgegenhaltungen:
- EP-A- 0 209 086
- EP-A- 0 334 719
- EP-A- 0 343 445
- EP-A- 0 538 602
- DE-A- 2 620 148
- DE-U- 9 305 767

## Beschreibung

Die Erfindung betrifft ein Luftfilter, insbesondere für die Innenraumbelüftung von Kraftfahrzeugen, bestehend aus einem Gehäuse, welches mit einem Rohlufteinlaß und einem Reinluftauslaß versehen ist, einem aus zick-zack-förmig gefalteten Filtermedium bestehenden Filtereinsatz, welcher mit einem umlaufenden Dichtelement zum Abdichten des Reinluftbereichs versehen ist, entsprechend dem Oberbegriff des Anspruchs 1.

Ein Luftfilter für Kraftfahrzeuge ist beispielsweise aus der DE-PS 40 28 899 bekannt. Dieses besteht aus einer Halterung und einem abnehmbaren Abdeckteil. Zwischen Halterung und Abdeckteil befindet sich ein Filterelement. Die Halterung ist mit Steckverbindungen versehen. In diese Steckverbindungen wird das Abdeckteil eingesteckt. Gleichzeitig wird über Dichtflächen, die an der Halterung und dem Abdeckteil angeordnet sind, der Filtereinsatz zwischen den beiden Teilen eingespannt. Die Steckverbindung ist ein elastisch verformbares Element, welches eine kraftschlüssige Verbindung zwischen Halterung und Abdeckteil bewirkt.

Es ist weiterhin aus dem DE-GM 87 09 100 eine Filtereinrichtung bekannt, bei welcher ein Filtereinsatz an seinem Umfang mit Laschen versehen ist und diese Laschen in die Verbindungsstelle, zwischen Filterdeckel und Filterboden, eingespannt werden. Die Laschen sind mit geeigneten Dichtmitteln versehen, so daß gleichzeitig eine Dichtwirkung zwischen Gehäuseboden und Gehäusedeckel erzielt wird.

Aus der EP A0343 445 ist ein Luftfilter, bestehend aus einem Gehäuse, welches mit einem Rohlufteinlaß und einem Reinluftauslaß versehen ist, bekannt. Der in dem Luftfilter angeordnete Filtereinsatz ist unlösbar mit einem Adapter verbunden. Dies bedeutet, daß der Filterpack mit einer Vergußmasse in einem zusammengefügten Zellrahmen abdichtend eingesetzt ist. Eine Herausnahme des Filterpacks oder der Filterzelle aus dem Adapter ist daher nicht möglich. Bei einem Austausch des Filtereinsatzes muß der Adapter gleichzeitig mit entfernt werden.

Ein Nachteil der genannten Luftfilter besteht darin, daß diese für einen bestimmten Einbauzweck entwickelt und gebaut wurden und das jeweilige Luftfilter nur in einem speziellen Gehäuse verwendet werden kann.

Der Erfindung liegt die Aufgabe zugrunde, die genannten Nachteile zu vermeiden und ein Luftfilter zu schaffen, das einfach austauschbar und für eine Vielzahl von Anwendungsfällen geeignet ist.

Die Aufgabe wird ausgehend von dem Oberbegriff des Hauptanspruchs durch dessen kennzeichnende Merkmale gelöst.

Ein wesentlicher Vorteil der Erfindung besteht darin, daß nunmehr mit Hilfe eines Adapters die Möglichkeit besteht, beliebige Gehäuse und Gehäuseformen mit einem normierten Filter auszustatten. Während das Filter bzw. der Filtereinsatz regelmäßig erneuert werden muß, verbleibt der Adapter in dem Gehäuse. Der Filtereinsatz kann sehr einfach ausgestaltet sein und ist deshalb auch preiswert herstellbar. Das Austauschen eines Filtereinsatzes, der mit aufwendigen Dichtungsprofilen bzw. Kunststoffprofilen an ein Gehäuse angepasst und der damit aufwendig und teuer ist, entfällt. Damit werden erhebliche Mengen an entsorgungspflichtigen Materialien eingespart. Außerdem ist die Herstellung normierter Filtereinsätze wirtschaftlicher als die Herstellung spezieller Sonderanfertigungen.

Ein wesentlicher Vorteil der Erfindung ist auch darin zu sehen, daß der Filtereinsatz selbst keine besonderen Befestigungsmittel aufweisen muß. Der Filtereinsatz wird mittels der Abdeckklappe, die das gesamte Gehäuse verschließt, in seiner Lage innerhalb des Adapters, fixiert.

In vorteilhafter Weise besteht das Gehäuse sowie der Adapter aus thermoplastischem Kunststoff. Der Adapter kann beispielsweise mit Metallklammern oder auch mit Filmscharnieren oder ähnlichem an dem Gehäuse befestigt sein.

Gemäß einer Ausgestaltung der Erfindung ist das Filterelement ein Papier- oder Kunststoffvliesfilter, welches zick-zack-förmig gefaltet ist und eine umlaufende Dichtung, beispielsweise aus PUR-Schaum oder aus Schaumstoff, ausweist. Das Filterelement kann seitlich angeordnete Grifflaschen aufweisen, die es ermöglichen, dasselbe aus dem Adapter zu entnehmen.

Unter Umständen kann es auch zweckmäßig sein, das Filter ohne Hilfsmittel zur manuellen Entnahme auzustatten. In diesem Fall muß das Filter mit einem Werkzeug, beispielsweise mit einem Schraubendreher, zur Entnahme durchstoßen und ausgehebelt werden. Da ein provisorisches Reinigen solcher Innenraumluftfilter, beispielsweise durch Ausklopfen, wie dies bei Motorluftfiltern gelegentlich zweckmäßig ist, nicht durchgeführt werden soll, stellt die Entnahme mit gleichzeitiger Zerstörung des Filtereinsatzes eine Möglichkeit dar, die diese Vorgehensweise unterbindet.

Gemäß einer weiteren Ausgestaltung der Erfindung weist der Adapter zur Erhöhung der Eigenstabilität Querstege auf. Diese Querstege sind auf der Reinluftseite des Filters angeordnet und behindern damit nicht den Austausch des Filtereinsatzes.

Eine weitere Ausgestaltung der Erfindung sieht an dem Adapter wenigstens zwei Haltenasen zum einseitigen Fixieren des Filterelements vor. Das Filterelement wird unter diese Haltenasen geschoben und auf der gegenüberliegenden Seite durch die zu schließende Abdeckklappe gehalten.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Die Erfindung wird nachfolgend anhand eines Ausführungsbeispiels näher erläutert. Es zeigt:
- Fig. 1: einen Längsschnitt durch ein Gehäuse mit einem Innenraumluftfilter,
- Fig. 2: einen Querschnitt durch ein Kraftfahrzeuginnenraumluftfilter.

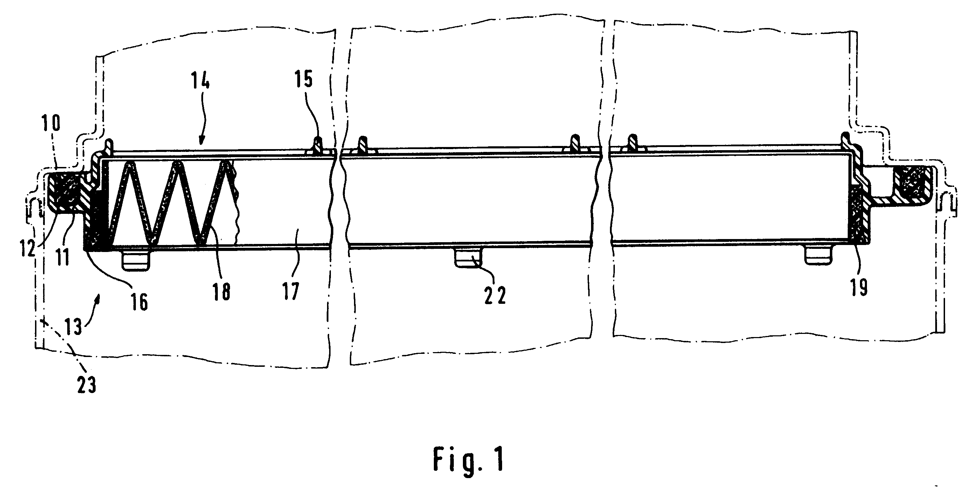

Der Längsschnitt gemäß Figur 1 zeigt ein strich-punktiert dargestelltes Gehäuseprofil 10. Dieses Gehäuse ist hier nur auszugsweise dargestellt. Innerhalb diesem Gehäuse ist ein Adapter 11 mit einer umlaufenden Dichtung 12 eingesetzt. Der Adapter ist auf der Rohluftseite 13 offen. Auf der Reinluftseite 14 ist der Adapter mit Versteifungsrippen 15 versehen. In dem von dem Adapter 11 gebildeten Rahmen 16 ist ein Filtereinsatz 17 eingesetzt. Der Filtereinsatz besteht aus zick-zack-förmig gefaltetem Filterpapier oder Vlies 18 und ist mit einer umlaufenden Dichtung 19 ausgestattet.

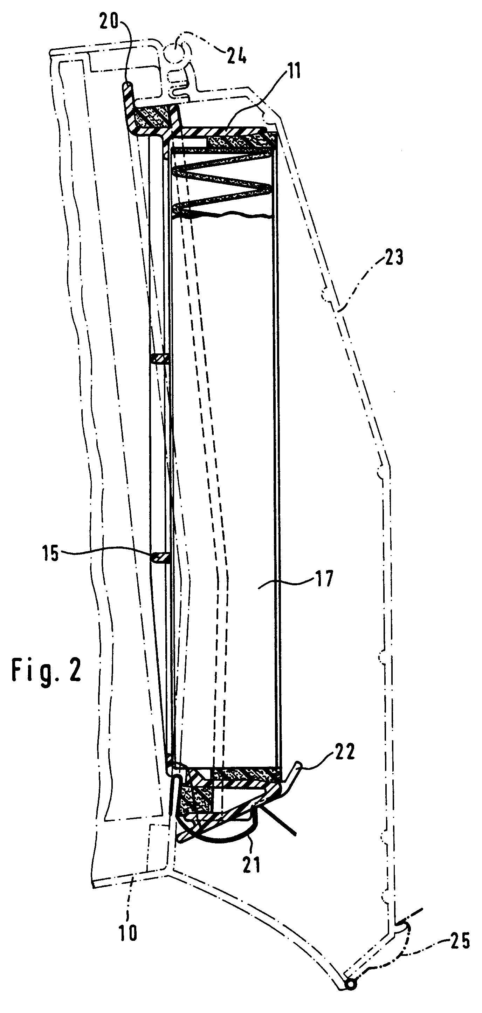

Die Figur 2 zeigt das Luftfilter im Querschnitt. Auch hier ist das Gehäuse nur andeutungsweise durch die strich-punktierte Linie angedeutet. Der Adapter ist auf der in der Figur obenliegenden Seite im Gehäuse durch einen Steg 20, der in einer Hinterschneidung des Gehäuses eingreift, befestigt. Auf der gegenüberliegenden Seite ist der Adapter 11 mit einer Federklammer 21 gesichert. Der Adapter ist damit lösbar im Gehäuse angeordnet und kann bei Bedarf entfernt werden. Der in dem Adapter 11 angeordnete Filtereinsatz 17 wird auf der in der Figur gezeigten unteren Seite mittels Haltenasen 22 gegen Herausfallen gesichert. Auf der oberen Seite erfolgt die Sicherung des Filtereinsatzes 17 über den Gehäusedeckel 23. Dieser ist am Gehäuse mittels eines Scharniers 24 befestigt und kann zur Entnahme des Filtereinsates hochgeklappt werden. Der Deckel ist mit Federklammern 25 verschließbar.

### Bezugszeichenliste

- 10: Gehäuse
- 11: Adapter
- 12: Dichtung
- 13: Rohluftseite
- 14: Reinluftseite
- 15: Versteifungsrippen
- 16: Rahmen
- 17: Filtereinsatz
- 18: Filterpapier
- 19: Dichtung
- 20: Steg
- 21: Federklammer
- 22: Haltenasen
- 23: Gehäusedeckel
- 24: Scharnier

## Patentansprüche

1. Filter insbesondere für die Innenraumbelüftung von Kraftfahrzeugen, bestehend aus einem Gehäuse, welches mit einem Rohlufteinlaß und einem Reinluftauslaß versehen ist, einem aus einem zick-zack-förmig gefaltetem Filtermedium bestehenden Filtereinsatz, wobei in dem Gehäuse ein Adapter (11) angeordnet ist und dieser Adapter in das Gehäuse (10) eingesetzt ist und wobei der Filtereinsatz (17) in den Adapter (11) in dem Adapter (11) angeordnet ist, dadurch gekennzeichnet, daß der Adapter (11) mit einer Schnappverbindung an dem Gehäuse (10) befestigt ist und daß der Adapter aus einem thermoplastischen Kunststoff besteht und der Filtereinsatz, der in dem Adapter (11) angeordnete Filtereinsatz mit Haltenasen (22) gegen Herausfallen gesichert ist.

2. Luftfilter nach Anspruch 1, dadurch gekennzeichnet, daß der Filtereinsatz mit einem umlaufenden Dichtelement zum Abdichten gegenüber dem Adapter (11) versehen ist.

3. Luftfilter nach Anspruch 1 oder 2, dadurch gekennzeichnet, daß der Adapter eine umlaufende Dichtung (12) zum wirksamen Abdichten zwischen Rohluft- und Reinluftseite aufweist.

4. Luftfilter nach einem der vorherigen Ansprüche, dadurch gekennzeichnet, daß der Filtereinsatz (17) mittels einer am Gehäuse angeordneten Abdeckklappe (23) in seiner Lage fixiert ist.

5. Luftfilter nach einem der vorherigen Ansprüche, dadurch gekennzeichnet, daß das Gehäuse (10) aus thermoplastischem Kunststoff besteht und der Adapter mittels Federmetallklammern (21) an das Gehäuse angeklipst ist.

6. Luftfilter nach einem der vorherigen Ansprüche, dadurch gekennzeichnet, daß das Filterelement (17) ein Papier- oder Kunststoffvliesfilter ist und desssen umlaufende Dichtung (19) aus PUR-Schaum auf Polyesterbasis oder aus Schaumstoff besteht.

7. Luftfilter nach einem der vorherigen Ansprüche, dadurch gekennzeichnet, daß der Adapter (11) zur Erhöhung der Eigenstabilität Querstege (15) aufweist.

8. Luftfilter nach einem der vorherigen Ansprüche, dadurch gekennzeichnet, daß an dem Adapter (11) wenigstens zwei Haltenasen (22) zum einseitigen Fixieren des Filterelements vorgesehen sind und die Fixierung der gegenüberliegenden Seite des Filterelements über die Abdeckklappe (23) erfolgt.

## Claims

1. Filter, more especially for use in the interior ventilation of automotive vehicles, including a housing which is provided with an unfiltered air inlet and a filtered air outlet, and a filter insert which comprises a filter medium folded in a zigzag-shaped manner, wherein a fitting part (11) is disposed in the housing and this fitting part is inserted in the housing (10), and wherein the filter insert (17) is disposed in the fitting part (11), characterised in that the fitting part (11) is secured on the housing (10) by a snap connection, and in that the fitting part is formed from a thermoplastic plastics material, and the filter insert, when disposed in the fitting part (11), is prevented from falling-out by retaining projections (22).

2. Air filter according to claim 1, characterised in that the filter insert is provided with a circumferential sealing means for providing a sealing from the fitting part (11).

3. Air filter according to claim 1 or 2, characterised in that the fitting part has a circumferential seal (12) for providing effective sealing between the unfiltered air side and the filtered air side.

4. Air filter according to one of the preceding claims, characterised in that the filter insert (17) is secured in its position by means of a cover flap (23), which is disposed on the housing.

5. Air filter according to one of the preceding claims, characterised in that the housing (10) is formed from thermoplastic plastics material, and the fitting part is clipped onto the housing by means of resilient metal clips (21).

6. Air filter according to one of the preceding claims, characterised in that the filter element (17) is a paper or plastics material web filter, and the circumferential seal (19) of said filter element is formed from expanded polyurethane based on polyester or from expanded plastics foam.

7. Air filter according to one of the preceding claims, characterised in that the fitting part (11) has cross-piece members (15) for increasing the inherent stability.

8. Air filter according to one of the preceding claims, characterised in that at least two retaining projections (22) are provided on the fitting part (11) for the unilateral securement of the filter element, and the securement of the oppositely situated side of the filter element is effected via the cover flap (23).

## Revendications

1. Filtre notamment pour la ventilation de l'habitacle de véhicules automobiles, comprenant un boîtier muni d'une entrée d'air non nettoyé et d'une sortie d'air nettoyé, d'un élément de filtre plié en zigzag constituant une garniture de filtre, le boîtier (10) logeant un adaptateur (11) et la garniture de filtre (17) étant prévue dans l'adaptateur (11),
caractérisé en ce que
l'adaptateur (11) est fixé au boîtier (10) par une liaison par encliquetage et
l'adaptateur est en matière thermoplastique et la garniture de filtre prévue dans l'adaptateur (11) est une garniture de filtre munie de becs de fixation (22) évitant que la garniture ne puisse se détacher.

2. Filtre à air selon la revendication 1,
caractérisé en ce que
la garniture de filtre est munie d'un élément d'étanchéité périphérique assurant l'étanchéité vis-à-vis de l'adaptateur (11).

3. Filtre à air selon la revendication 1 ou 2,
caractérisé en ce que
l'adaptateur comporte un joint périphérique (12) assurant l'efficacité de l'étanchéité entre le côté de l'air non nettoyé et le côté de l'air nettoyé.

4. Filtre à air selon l'une quelconque des revendications précédentes,
caractérisé en ce que
la garniture de filtre (17) est bloquée en position par un volet de recouvrement (23) prévu sur le boîtier.

5. Filtre à air selon l'une quelconque des revendications précédentes,
caractérisé en ce que
le boîtier (10) est en matière thermoplastique et l'adaptateur est encliqueté sur le boîtier par des pinces métalliques à ressort (21).

6. Filtre à air selon l'une quelconque des revendications précédentes,
caractérisé en ce que
l'élément de filtre (17) est un filtre en papier ou en matière plastique et son joint périphérique (19) est en mousse de polyuréthane, à base de polyester ou d'une matière à mousse.

7. Filtre à air selon l'une quelconque des revendications précédentes,
caractérisé en ce que
l'adaptateur (11) comporte une entretoise (15) pour augmenter sa stabilité propre.

8. Filtre à air selon l'une quelconque des revendications précédentes,
caractérisé en ce que
l'adaptateur (11) comporte au moins deux becs de fixation (22) pour le blocage unilatéral de l'élément de filtre et la fixation du côté opposé de l'élément de filtre se fait par le capuchon de recouvrement (23).
